# DEMANDE DE BREVET EUROPEEN

(11) **EP 1 020 841 A1**
(43) Date de publication de la demande: **19.07.2000**
(21) Numéro de dépôt: 00200081.8
(22) Date de dépôt: 11.01.2000
(51) Int. Cl.: G09G 5/00, G06F 3/14

(54) **Système d'enregistrement d'écran pour reconstitution d'opération**

(30) Priorité: 14.01.1999 FR 9900429
(71) Demandeur: Enertec S.A., 92143 Clarmart Cedex (FR)
(72) Inventeur: Prevot, Franck, 75014 Paris (FR); Sulzer, Jean-Francois, 92310 Sevres (FR)
(74) Mandataire: Richebourg, Michel François

(57) **Abrégé**

L'invention concerne un équipement directement compatible avec la plupart des écrans de visualisation. Selon l'invention, l'équipement n'acquiert que le volume de données nécessaire à chaque application, tranfère ces données sur un organe de stockage standard et les restitue sur un même type d'écran sans dégradation de qualité et à rythme réel.

L'invention procède par sous-échantillonnages et compressions. L'organe de stockage périphérique permet de travailler à un ryhtme quelconque et donc d'utiliser à tout moment de façon optimale les algorithmes de compression.

On conserve ainsi les caractéristiques souhaitées de volume de données et de rapidité sans altérer la résolution lors de la reproduction en temps différé.

## Description

La présente invention concerne l'utilisation d'écrans de haute résolution dans de nombreux secteurs techniques, et vise à conserver la trace des interactions des opérateurs avec ces écrans.

Dans de nombreux secteurs techniques et industriels, comme le secteur pétrolier ou parapétrolier, le secteur du traffic aérien et de son contrôle, ou du traffic maritime, ou de certains domaines militaires, des « opérations» ont lieu ou sont commandées ou se déroulent en mode de routine, et ces opérations, de quelque nature qu'elles soient, échangent avec des opérateurs des informations ou données en nombre ou volume considérable, grâce à de tels écrans.

Il peut s'agir par exemple de missions de surveillance de sites sensibles comme certaines salles de centrales nucléaires ou autres, de missions ponctuelles comme la reconnaissance d'un navire en difficulté, ou certaines missions de reconnaissance militaire, ou d'essais en vol, ou de surveillance d'une opération sensible sur une plate-forme off-shore, ou analogue.

Il s'agit en fait de toute situation où au moins un opérateur gère un écran de contrôle qui lui permet, sur la base des données qu'il recoit, d'interagir en temps réel avec la situation et de peser sur elle par des décisions, des choix, des demandes d'informations supplémentaires, etc...

Les données peuvent provenir de toute source, comme des caméras internes ou externes, de capteurs les plus divers, de systèmes de traitement de l'information, d'autres personnels ou systèmes exploitant leurs propres écrans, des robots , etc.....

De même, l'interaction de l'opérateur peut prendre toutes les formes, telles que : orienter une caméra de contrôle, piloter un robot, élargir ou rétrécir un champ de vision, créer plusieurs fenêtres sur son écran pour visualiser simultanément, par exemple, un plan d'installation et une surveillance video d'une pièce sensible, ou un manuel d'intervention, etc....., ou bien encore telles que réclamer des informations supplémentaires sur tel aspect ou telle pièce ou telle instruction ou telle norme de sécurité, ou tel aspect d'un process (température, pression, radioactivité ambiante, données de vol etc....).

Il est naturellement indispensable de pouvoir exploiter ces données selon différentes configurations.

Comme on l'a vu, la configuration de base est celle du temps réel, puisque c'est sous ce mode que l'opérateur doit évidemment réagir et interagir.

Cependant, après la fin de l'opération, il est important de pouvoir exploiter à nouveau, en temps différé, les données qui ont transité sur l'écran de l'opérateur. Par exemple, il est important de pouvoir reconstituer un incident, les mesures prises par l'opérateur, ses incidences sur le résultat final, et de pouvoir ainsi soit analyser un incident, soit prévenir la survenue d'un autre incident, modifier les consignes de sécurité, soit disposer d'un moyen de preuve concernant telle ou telle partie de l'opération, soit encore disposer en différé du temps et de la réflexion ou du recul nécessaires à une bonne prise de décision, etc....

De tels systèmes peuvent également faire partie de simulateurs de salle de contrôle de centrales, ou de simulateur de vol ou autres simulateurs, où un incident ou un vol peut être reconstitué pour la critique de l'élève après la simulation.

L'homme de métier comprendra la portée très générale de l'invention, et ses multiples applications.

Les appareillages actuels produisent des données de très haute qualité et l'opérateur a notamment à sa disposition des écrans de visualisation de très haute résolution.

Pour obtenir une possibilité de temps différé, l'exploitant de l'opération cherche naturellement à enregistrer les données de l'opération qui s'est déroulée. On a alors notamment recours à des systèmes de type magnétoscope. La résolution de ceux - ci est cependant nettement trop faible, et des chiffres essentiels, par exemple, qui sont très petits car la très haute résolution des écrans le permet, peuvent devenir illisibles à la reproduction. Ceci sera expliqué plus en détail ci-dessous.

De plus, on sait que trois caractéristiques sont, dans ce domaine général, cruciales : ce sont la capacité à gérer un volume considérable de données, la capacité à les gérer avec la rapidité maximale correspondant au temps réel, et la capacité à conserver à la restitution ou reproduction la très haute définition, correspondant à celle des écrans de plus en plus performants. Or, ces trois impératifs sont par nature contradictoires.

L'un des objets de l'invention est donc de proposer un procédé et un appareillage permettant d'enregistrer l'ensemble des données d'une opération (par « **opération** » on désigne l'ensemble des missions, surveillances, actions, réactions, interactions, etc..... décrites ci-dessus dans leur généralité et à l'aide de quelques exemples concrets) qui transite sur au moins un écran de haute définition, et de restituer ou reproduire ces données pratiquement sans aucune perte de résolution, ni de qualité d'image, ni de repère temporel, c'est à dire de reproduire en temps différé l'exacte réalité de l'opération telle qu'elle s'est déroulée.

Avec la généralisation des techniques de traitement de l'information, de nombreuses activités humaines industrielles, scientifiques, militaires ou de conduite de véhicules ou de systèmes font appel à des écrans pour échanger de l'information.

Les informations les plus diverses sont présentées sur ces écrans selon de multiples fenêtres ; on y trouve de la vidéo, des fonds de carte animés, des caractères alphanumériques, des animations, des dessins, etc...

La technologie des écrans n'a cessé de s'améliorer si bien que leur résolution est aujourd'hui considérablement supérieure à celle des meilleurs téléviseurs.

De par leur complexité et du fait de leur rôle privilégié d'interface entre l'homme et le système, la connaissance de ce qui a été présenté à l'écran est un élément essentiel pour interpréter tout incident ou accident qui a pu se produire sur le système à des fins techniques, légales ou autres, ou pour reconstituer les situations nécessaires à l'entraînement des personnels.

Aussi longtemps que les systèmes de traitement étaient rudimentaires et que les stations de travail n'étaient pas interactives, la fonction de reconstitution de mission ou d'opération pouvait être réalisée en enregistrant les paramètres d'entrée et en refaisant le même traitement à la restitution pour reproduire ce qui a été " normalement " présenté ; les anomalies dans le traitement de l'information et les interventions humaines sont alors naturellement ignorées.

Au prix d'une conversion de format de plus en plus complexe du fait de l'absence de normes, des magnétoscopes ont été également utilisés pour enregistrer les images présentées à l'écran. Si les magnétoscopes permettent aujourd'hui d'enregistrer et de restituer des images animées de très bonne qualité, ils sont toutefois conçus pour travailler avec des images de type télévision et leur résolution est de près d'un ordre de grandeur insuffisante pour restituer les plus petits caractères qui contiennent souvent l'essentiel de l'information.

Pour résoudre cette difficulté, des techniques de stockage d'images de haute résolution où tous les pixels et toutes les images seraient pris en compte sont naturellement envisageables, mais conduisent à des volumes d'information totalement prohibitifs.

Des solutions purement informatiques pour mettre dans un fichier les données servant à générer les figures présentées à l'écran ont été mises au point, mais ne s'appliquent qu'aux cas rares où les écrans n'incluent que de l'information de synthèse.

La présente invention vise à éliminer les inconvénients ci-dessus sous forme d'un équipement directement compatible de la plupart des écrans de visualisation, permettant de n'acquérir que le volume de données nécessaire à chaque application, de transférer ces données sur un organe de stockage standard et de restituer sur le même type d'écran les informations sans dégradation de qualité et à rythme réel. Pour conserver une autonomie et un coût de stockage acceptables, une partie de la solution consiste à réduire le volume d'information au minimum suffisant pour une restitution de la qualité désirée.

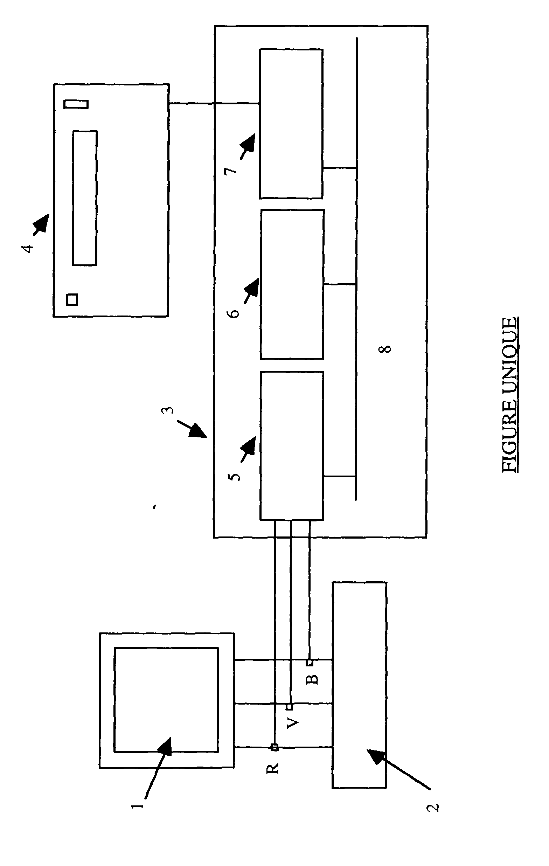

D'autres caractéristiques et avantages de l'invention apparaîtront mieux à la lecture de la description qui va suivre, et en se référant au dessin annexé, sur lequel :
- la figure unique représente un exemple non limitatif de schéma de mode de réalisation de l'invention.

Sur la figure unique, les références ont les significations suivantes :
- 1 écran haute résolution
- 2 station de travail (par exemple, ordinateur de type « PC »)
- R entrée rouge
- B entrée bleue
- V entrée verte
- 3 boitier de l'appareillage selon l'invention
- 4 Module de stockage des données
- 5 Module d'acquisition vidéo (« Frame Grabber »)
- 6 Module de compression sans perte
- 7 Coupleur informatique
- 8 Bus interne

L'invention repose sur trois éléments principaux :
- les images présentées sur un écran utilisé en traitement de l'information ou pour piloter un système sont d'excellente qualité (en particulier contraste et résolution) pour favoriser la lisibilité et sont rafraîchies beaucoup plus fréquemment qu'en télévision pour améliorer le confort de vision, mais aucune restitution de mouvement réelle n'est nécessaire et le contenu informationnel n'évolue que très lentement vis-à-vis du taux de rafraîchissement.
- chaque plan image comprend de nombreuses zones unies, souvent relativement étendues, susceptibles d'être automatiquement prises en compte de façon optimale par les algorithmes de compression sans perte connus tels que ADLC, ...
- un stockage des données résultantes sur un périphérique de type informatique plutôt que sur un magnétoscope permet de travailler à rythme quelconque et donc d'utiliser à tout instant de façon optimale ces algorithmes de compression.

De manière générale, l'invention concerne donc un procédé d'enregistrement d'écran (par « **enregistrement d'écran** » on désigne dans tout ce texte l'enregistrement de l'ensemble des données ayant transité sur l'écran durant une certaine « opération » de telle sorte que l'ensemble de ces affichages puisse être ultérieurement restitué à l'identique sur le même type d'écran) qui comprend au moins une étape qui consiste à capturer sous forme d'un fichier numérique le contenu informationnel de plans image complets.

Egalement de manière générale, l'invention concerne un procédé d'enregistrement d'écran qui comporte au moins les trois étapes fonctionnelles suivantes :
- capture au rythme voulu des données de l'opération, image complète par image complète, sous forme d'un fichier numérique
- traitement automatique par un algorithme de compression sans perte
- stockage des données résultantes dans un périphérique de type informatique.

La restitution ultérieure fait naturellement appel à la séquence inverse.

L'homme de métier comprendra que l'invention comprend toutes les formes de mise en oeuvre du procédé général décrit ci-dessus, c'est à dire tous les moyens particuliers permettant de réaliser les trois fonctions indiquées, optimisés pour le type particulier des images concernées.

De manière générale, l'invention concerne également un procédé du type précédent qui procède par sous échantillonnages adaptés successifs des données par plans images complets et compressions successives sans pertes, puis stockages successifs.

Egalement de manière générale, l'invention concerne un appareillage d'enregistrement d'écran qui comporte au moins un ou plusieurs modules permettant de réaliser les trois opérations fonctionnelles suivantes :
- capture au rythme voulu des données de l'opération, image complète par image complète, sous forme d'un fichier numérique
- traitement automatique par un algorithme de compression sans perte
- stockage des données résultantes dans un périphérique de type informatique.

L'appareil selon l'invention est naturellement capable d'effectuer les opérations inverses pour la restitution.

Comme périphérique de type informatique, on pourra utiliser les appareils tels que le dérouleur 3590 d'IBM (TM), des disques durs Barracuda (TM) de la société Seagate montés en RAID ou dérouleur DV 5830 de la société ENERTEC (TM).

Comme coupleur informatique, on pourra utiliser toute carte par exemple au format PCI communicant en SCSI, ULTRA-SCSI ou Fibre Channel telles que celles de marques Q-Logic, Simbios ou Adaptec.

Comme module d'acquisition vidéo, on pourra utiliser par exemple les cartes GENESIS (TM) de Matrox.

Sur la figure unique annexée, le module d'acquisition vidéo est connecté aux trois entrées composantes R,V,B du moniteur à tube cathodique (écran). Le bus interne 8 permet de véhiculer les données vers un module de compression sans perte, où un algorithme de compression sans perte réalise une compression, puis vers un module de stockage de type informatique au travers d'un module coupleur informatique, assurant l'interface.

Naturellement, l'homme de métier saura envisager tout mode de connection équivalent techniquement.

Selon ses divers aspects particuliers, l'invension concerne :
- un appareillage ou boîtier (ou coffret) indépendant connecté en dérivation des entrées composantes (rouge, vert, bleu) d'un moniteur à tube cathodique capable, quel que soit le format de l'écran et sans perturbation à celui-ci, de capturer sous forme d'un fichier numérique le contenu informationnel de plans images complets.
- un appareillage ou boîtier (ou coffret) tel que ci-dessus comportant une à trois cartes d'acquisition vidéo (" frame grabber ") selon qu'une carte unique a un rythme suffisant pour traiter simultanément les trois couleurs ou non.
- un appareillage ou boîtier (ou coffret) tel que ci-dessus dans lequel le rythme de capture des plans d'images complets peut être sélectionné en fonction de l'évolutivité des données propre à chaque application.
- un appareillage ou boîtier (ou coffret) tel que ci-dessus dans lequel un repère temporel est acquis simultanément aux plans d'images de façon à pouvoir restituer ultérieurement les informations dans la même base de temps qu'à l'enregistrement.
- un appareillage ou boîtier (ou coffret) tel que ci-dessus capable de traiter les données ainsi recueillies et les formater de façon à ce qu'elles soient directement compatibles des moyens de stockage informatiques (bande, disque, ...) standard.
- un appareillage ou boîtier (ou coffret) tel que ci-dessus comportant des moyens (matériels ou logiciels) de compression sans perte des données tels que ceux connus sous le vocable d'algorithmes ADLC, ICT et autres ou dérivés.
- un appareillage ou boîtier (ou coffret) tel que ci-dessus pour lequel l'optimisation des capacités de traitement conduit à délocaliser la compression sans perte dans le moyen de stockage informatique.
- un appareillage ou boîtier (ou coffret) tel que ci-dessus capable, à la restitution, de piloter le moyen de stockage informatique, en extraire les données et reconstituer les signaux nécessaires pour que connectées aux entrées composantes (RVB) de l'écran les images soient restituées à leur rythme d'origine.
- un appareillage ou boîtier (ou coffret) tel que ci-dessus permettant de restituer, à la demande, les images à un rythme accéléré pour faciliter une recherche rapide.
- un appareillage ou boîtier (ou coffret) tel que ci-dessus tel que ses paramètres de configuration et de mode d'utilisation sont sélectables localement ou par liaison informatique.
- un appareillage dans lequel la réalisation de ce qui précède est effectuée sous forme de cartes enfichables et logiciels intégrés au système hôte en un seul ou en plusieurs unités ou modules, au lieu de se présenter sous forme d'un appareillage ou boîtier (ou coffret) indépendant.
- un appareillage dans lequel la réalisation de ce qui précède est effectuée dans une technologie renforcée et selon les normes en vigueur dans les environnements sévères pour utilisation à bord de véhicules.
- tout appareillage tel que décrit ci-dessus, connecté en dérivation à tout type d'entrée autre que R,V,B, tel que composite, numérique, Firewire (TM) disponibles sur les moniteurs existants ou qui seront conçus ultérieurement.
L'invention concerne encore
- les moniteurs haute résolution caractérisés en ce qu'ils comportent, ou sont connectés à, un appareillage tel que décrit ci dessus, ainsi que
- les moniteurs haute résolution caractérisés en ce qu'ils mettent en oeuvre le procédé tel que décrit ci dessus, ainsi que
- les procédés d'enregistrement d'écran tels que décrits ci-dessus, caractérisé en ce qu'il comprennent de plus les étapes ou fonctions décrites dans les descriptions des modes de réalisation des appareillages.

L'homme de métier comprendra que l'invention comprend toutes les formes de mise en oeuvre du procédé général et de l'appareillage général décrits ci-dessus, c'est à dire tous les moyens particuliers permettant de réaliser les trois fonctions indiquées, dans toutes les applications industrielles ou commerciales.

## Revendications

1. Procédé d'enregistrement d'écran (par « **enregistrement d'écran** » on désigne l'enregistrement de l'ensemble des données ayant transité sur l'écran durant une certaine « opération » de telle sorte que l'ensemble de ces affichages puisse être ultérieurement restitué à l'identique sur le même type d'écran) caractérisé en ce qu'il comprend au moins une étape qui consiste à capturer sous forme d'un fichier numérique le contenu informationnel de plans image complets.

2. Procédé d'enregistrement d'écran selon la revendication 1, caractérisé en ce qu'il comporte au moins les trois étapes fonctionnelles suivantes :
- capture au rythme voulu des données de l'opération, image complète par image complète, sous forme d'un fichier numérique
- traitement automatique par un algorithme de compression sans perte
- stockage dés données résultantes dans un périphérique de type informatique.

3. Procédé d'enregistrement d'écran selon la revendication 1 ou 2, caractérisé en ce qu'il procède par sous échantillonnages adaptés successifs des données et compressions successives sans pertes, puis stockages successifs, par plans images complets.

4. Procédé d'enregistrement d'écran selon l'une quelconque des revendications 1 à 3, caractérisé en ce qu'il comprend de plus une étape de restitution ultérieure qui fait appel à la séquence inverse.

5. Appareillage d'enregistrement d'écran caractérisé en ce qu'il comporte au moins un ou plusieurs modules permettant de réaliser les trois opérations fonctionnelles suivantes :
- capture au rythme voulu des données de l'opération, image complète par image complète, sous forme d'un fichier numérique
- traitement automatique par un algorithme de compression sans perte
- stockage des données résultantes dans un périphérique de type informatique.

6. Appareillage d'enregistrement d'écran selon la revendication 5, caractérisé en ce qu'il est de plus capable d'effectuer les opérations inverses pour la restitution.

7. Appareillage d'enregistrement d'écran selon la revendication 5 ou 6, caractérisé en ce que, comme périphérique de type informatique, on pourra utiliser les appareils tels que le dérouleur 3590 d'IBM (TM), des disques durs Barracuda (TM) de la société Seagate montés en RAID ou dérouleur DV 5830 de la société ENERTEC (TM).

8. Appareillage d'enregistrement d'écran selon l'une quelconque des revendications 5 à 7, caractérisé en ce que, comme coupleur informatique,on pourra utiliser toute carte par exemple au format PCI communicant en SCSI, ULTRA-SCSI ou Fibre Channel telles que celles de marques Q-Logic, Simbios ou Adaptec.

9. Appareillage d'enregistrement d'écran selon l'une quelconque des revendications 5 à 8, caractérisé en ce que, comme module d'acquisition vidéo, on pourra utiliser par exemple les cartes GENESIS (TM) de Matrox.

10. Appareillage d'enregistrement d'écran selon l'une quelconque des revendications 5 à 9, caractérisé en ce que le module d'acquisition vidéo 5 est connecté aux trois entrées composantes R,V,B du moniteur à tube cathodique 1 (écran).

11. Appareillage d'enregistrement d'écran selon l'une quelconque des revendications 5 à 10, caractérisé en ce que le bus interne 8 permet de véhiculer les données vers un module de compression sans perte 6, où un algorithme de compression sans perte réalise une compression, puis vers un module de stockage 4 de type informatique au travers d'un module coupleur informatique 7, assurant l'interface.

12. Appareillage d'enregistrement d'écran selon l'une quelconque des revendications 5 à 11, caractérisé en ce qu'il utilise tout mode de connection équivalent techniquement.

13. Appareillage d'enregistrement d'écran selon l'une quelconque des revendications 5 à 12, caractérisé en ce qu'il consiste en un appareillage ou boîtier (ou coffret) 3 indépendant connecté en dérivation des entrées composantes (rouge, vert, bleu) d'un moniteur à tube cathodique 1 capable, quel que soit le format de l'écran et sans perturbation à celui-ci, de capturer sous forme d'un fichier numérique le contenu informationnel de plans images complets.

14. Appareillage d'enregistrement d'écran selon l'une quelconque des revendications 5 à 13, caractérisé en ce qu'il consiste en un un appareillage ou boîtier (ou coffret) 3 comportant une à trois cartes d'acquisition vidéo 5 (" frame grabber ") selon qu'une carte unique a des caractéristiques de rythme suffisantes pour traiter simultanément les trois couleurs ou non.

15. Appareillage d'enregistrement d'écran selon l'une quelconque des revendications 5 à 14, caractérisé en ce qu'il consiste en un appareillage ou boîtier (ou coffret) 3 dans lequel le rythme de capture des plans d'images complets peut être sélectionné en fonction de l'évolutivité des données propres à chaque application.

16. Appareillage d'enregistrement d'écran selon l'une quelconque des revendications 5 à 15, caractérisé en ce qu'il consiste en un appareillage ou boîtier (ou coffret) 3 dans lequel un repère temporel est acquis simultanément aux plans d'images de façon à pouvoir restituer ultérieurement les informations dans la même base de temps qu' à l'enregistrement.

17. Appareillage d'enregistrement d'écran selon l'une quelconque des revendications 5 à 16, caractérisé en ce qu'il consiste en un appareillage ou boîtier (ou coffret) 3 capable de traiter les données ainsi recueillies et les formater de façon à ce qu'elles soient directement compatibles des moyens de stockage informatiques (bande, disque, ...) standard.

18. Appareillage d'enregistrement d'écran selon l'une quelconque des revendications 5 à 17, caractérisé en ce qu'il consiste en un appareillage ou boîtier (ou coffret) 3 comportant des moyens (matériels ou logiciels) de compression sans perte des données tels 6 que ceux connus sous le vocable d'algorithmes ADLC, ICT et autres ou dérivés.

19. Appareillage d'enregistrement d'écran selon l'une quelconque des revendications 5 à 17, caractérisé en ce qu'il consiste en un appareillage ou boîtier (ou coffret) 3 pour lequel l'optimisation des capacités de traitement conduit à délocaliser la compression sans perte dans le moyen de stockage informatique.

20. Appareillage d'enregistrement d'écran selon l'une quelconque des revendications 5 à 19, caractérisé en ce qu'il consiste en un appareillage ou boîtier (ou coffret) 3 capable, à la restitution, de piloter le moyen de stockage informatique, en extraire les données et reconstituer les signaux nécessaires pour que connectées aux entrées composantes (RVB) de l'écran les images soient restituées à leur rythme d'origine.

21. Appareillage d'enregistrement d'écran selon l'une quelconque des revendications 5 à 20, caractérisé en ce qu'il consiste en un appareillage ou boîtier (ou coffret) 3 permettant de restituer, à la demande les images à un rythme accéléré pour faciliter une recherche rapide.

22. Appareillage d'enregistrement d'écran selon l'une quelconque des revendications 5 à 21, caractérisé en ce qu'il consiste en un appareillage ou boîtier (ou coffret) 3 tel que ses paramètres de configuration et de mode d'utilisation sont sélectables localement ou par liaison informatique.

23. Appareillage d'enregistrement d'écran selon l'une quelconque des revendications 5 à 22, caractérisé en ce que les fonctions décrites sont effectuées sous forme de cartes enfichables et logiciels intégrés au système hôte en un seul ou en plusieurs unités ou modules, au lieu de se présenter sous forme d'un appareillage ou boîtier (ou coffret) indépendant.

24. Appareillage d'enregistrement d'écran selon l'une quelconque des revendications 5 à 23, caractérisé en ce que les fonctions décrites sont effectuées dans une technologie renforcée et selon les normes en vigueur dans les environnements sévères pour utilisation à bord de véhicules.

25. Appareillage selon l'une quelconque des revendications 1 à 24, caractérisé en ce qu'il est connecté en dérivation à tout type d'entrée, tel que composite, numérique, Firewire (TM) disponibles sur les moniteurs existants ou qui seront conçus ultérieurement.

26. Moniteurs haute résolution caractérisés en ce qu'ils comportent, ou sont connectés à, un appareillage selon l'une quelconque des revendications 1 à 25.

27. Moniteurs haute résolution caractérisés en ce qu'ils mettent en oeuvre le procédé selon l'une quelconque des revendications 1 à 4 ou 28.

28. Procédé d'enregistrement d'écran selon l'une quelconque des revendications 1 à 4, caractérisé en ce qu'il comprend de plus les étapes décrites dans l'une quelconque des revendications 5 à 24.
